# EUROPEAN PATENT SPECIFICATION

(11) **EP 3 223 626 B1**
(45) Date of publication and mention of the grant of the patent: **17.02.2021**
(21) Application number: 15841073.8
(22) Date of filing: 25.11.2015
(51) Int. Cl.: A23K 20/142, B01D 21/00, A23L 33/17

(54) **PROCESS FOR SEPARATING AMINO AND/OR ORGANIC ACID-CONTAINING PARTICLES FROM A MIXTURE**
VERFAHREN ZUR TRENNUNG VON PARTIKELN MIT AMINOSÄURE UND/ODER ORGANISCHER SÄURE AUS EINEM GEMISCH
PROCÉDÉ DE SÉPARATION DE PARTICULES CONTENANT UN ACIDE AMINÉ ET/OU UN ACIDE ORGANIQUE À PARTIR D'UN MÉLANGE

(30) Priority: 25.11.2014 NL 2013874
(43) Date of publication of application: 04.10.2017
(73) Proprietor: Sanovations B.V., 9722 WL Groningen (NL)
(72) Inventor: SANDERS, Johan Pieter Marinus, 9722 WL Groningen (NL)
(74) Representative: EP&C
(86) International application number: PCT/NL2015/050825
(87) International publication number: WO 2016/085338

(56) References cited:
- WOFSEY, A.R. ET AL.: "A unique synaptosomal fraction, which accumulates glutamic and aspartic acids in brain tissue", PROCEEDINGS OF THE NATIONAL ACADEMY OF SCIENCES OF THE USA, vol. 68, no. 6, 1971, pages 1102-1106, XP002741996, USNEW YORK, NY
- SILPANANTA, P. ET AL.: "Fractionation of a hyaluronic acid preparation in a density gradient", BIOCHEMICAL JOURNAL., vol. 104, 1966, pages 404-409, XP002741997, GBTHE BIOCHEMICAL SOCIETY, LONDON. ISSN: 0264-6021

## Description

### Field of the invention

The present invention relates to methods for separating amino and/or organic -acid containing particles from a mixture of amino and/or organic acid-containing particles based on the density of the particles and to amino and/or organic acid-fractions thus obtained. The invention provides for batch as well as continuous processes and under ambient or increased gravitational forces.

### Background of the invention

Proteins consist of 20 different amino acids of which 9 are 'essential' because monogastric organisms cannot synthesize these by their own. The cost of feed for pigs and poultry can be lowered by adding amino acids that are the most limiting in cheap bulk protein sources such as corn flower, rape meal, sunflower meal etc. Two amino acids, lysine and methionine have large application (1 million ton/ year) while threonine is fast growing product, now 100 000 tonnes and the number 4 is tryptophan which is small in volume (10 000 ton).

Tryptophan and the other essential amino acids are currently too expensive for most animal feed applications. Even if one of them would be available at low cost, the absence of the other would prevent their use in feed. Glutamic acid is also applied at large scale (> 1Mton/year) as a taste enhancer in human food. Almost all 20 amino acids find an application as food ingredient for hospital or sport food, for special diets or as ingredient in flavour and fragrance applications..

Amino acids can also be used as building blocks for (bulk) chemical products. Their actual cost price, even of the 3 amino acids that are produced on large scale( lysine, methionine and glutamic acid that is used as a taste enhancer) is too high for the production of bulk chemicals.

Typically, amino acids are produced by fermentation, by chemical synthesis and by extraction from proteins. Their purification is done by ion exchange or by precipitation from water in which the desired amino acid is present in high concentration.

However, there is still a need for a more efficient and cost effective production of amino acids and a need to isolate and separate amino acids from mixtures of amino acids and other complex starting compositions that contain amino acids.

Many complex starting compositions of amino acids also contain organic acids. Starting compositions used in the method of the invention may also contain organic acids but be devoid of amino acids. There is also a growing need for cheap organic acids and for the improved use of organic feed streams.

The present invention provides methods for achieving these and other goals and will lower the cost of production of most or all amino acids.

The amino acids provided by the method of the invention can find their application in animal feed.

The amino acids and/or organic acids provided by the method of the invention can be used as chemical building blocks.

### Summary of the invention

The invention is as set out in the claims.

The present inventors have found that a fraction enriched in selected amino and/or organic acid-containing particles can be obtained from a mixture of amino and/or organic acid-containing particles by subjecting the mixture of amino and/or organic acid-containing particles to a separation step in a medium of a density wherein amino and/or organic acid-containing particles that have a density that is lower than the density of the medium will float (lighter fraction) and amino and/or organic acid-containing particles that have a density that is lower than the density of the medium will sink (heavier fraction). Accordingly, the invention relates to a method or process for separating amino and/or organic acid-containing particles from a mixture of amino and/or organic acid-containing particles based on density, comprising
- providing a feed of the amino and/or organic acid-containing particles
- providing a medium, in which the particles do not, or less than 0.1 g/l, dissolve, wherein the medium has a fixed density and not a density gradient, and wherein the medium has a selected density effective for particles of a lower density than the selected density to float in the medium for particles of a higher density than the selected density to sink in the medium;
- adding the feed of the amino and/or organic acid-containing particles to the medium; and
- separating the amino and/or organic acid-containing particles of the higher density from the amino and/or organic acid-containing particles of the lower density.

The method according to the invention is used to separate amino and/or organic acid-containing particles from a mixture of amino and/or organic acid-containing particles that has been obtained from a feed and the method provides fractions of amino and/or organic acid-containing particles that are enriched or depleted in certain amino and/or organic acids compared to the composition of the starting mixture of amino and/or organic acid-containing particles.

Furthermore in another aspect, the present disclosure pertains to amino and/or organic acid-containing particles that are obtained by the process of the invention

Prior art documents discussing similar methods include WOFSEY, A.R. ET AL.: "A unique synaptosomal fraction, which accumulates glutamic and aspartic acids in brain tissue", PROCEEDINGS OF THE NATIONAL ACADEMY OF SCIENCES OF THE USA, vol. 68, no. 6, 1971, USNEWYORK, NY, pages 1102 - 1106, and SILPANANTA, P. ET AL.: "Fractionation of a hyaluronic acid preparation in a density gradient", BIOCHEMICAL JOURNAL., vol. 104, 1966, GB THE BIOCHEMICAL SOCIETY, LONDON., pages 404 - 409, however, neither publication employs a medium with a fixed density.

### Detailed description of the invention

Thus the invention pertains to a method for separating amino and/or organic acid-containing particles from a mixture of amino and/or organic acid-containing particles based on density, comprising
- providing a feed of the amino and/or organic acid-containing particles
- providing a medium, in which the particles do not, or less than 0.1 g/l, dissolve, wherein the medium has a fixed density and not a density gradient, and wherein the medium has a selected density effective for particles of a lower density than the selected density to float in the medium for particles of a higher density than the selected density to sink in the medium;
- combining the feed of the amino and/or organic acid-containing particles with the medium; and
- separating the amino and/or organic acid-containing particles of the higher density from the amino and/or organic acid-containing particles of the lower density.

The method of the invention starts with the provision of a feed of amino and/or organic acid-containing particles. The feed can be any feed, but there is a preference for a feed that is a stream originating from an (agro) industrial scale process or is a waste product from an (agro)industrial process.

Examples thereof are given below. The feed of amino and/or organic acid-containing particles can be any feed, but is preferably a feed that is obtained from a process wherein a feed comprising amino and/or organic acids is converted into amino and/or organic -acid containing particles, such as a crystallization process or a solidification process. Such a process can be in the form of subjecting a feed comprising amino and/or organic acids, preferably in a solution or a slurry, to a process wherein the solvent is removed from the mixture (for instance by evaporation) or an anti-solvent such as ethanol or 1-butanol is added. As a result, amino and/or organic acid-containing particles are obtained which may have a different composition due to differences in the crystallisation or solidification properties for different amino and/or organic acids (for instance an acidic amino acid may crystallise at a different moment than a polar amino acid), thereby leading to a mixture of amino and/or organic acid-containing particles. The present method separates this mixture of amino and/or organic acid-containing particles into fractions that are enriched in certain amino and/or organic acids and/or depleted in other amino and/or organic acids. These fractions are separated based on their density or relative density compared to a medium. The separation step of the present method is preferably based on equilibrium separation (sink/float) rather than kinetic separation (centrifugal). Equilibrium separation can be supplemented by kinetic separation, i.e. wherein the centrifugal force is below 1000g, preferably below 100g. Practically this can be accomplished in a semi-continuous centrifugal separation process at relative low g-forces, as indicated.

The feed comprising amino and/or organic acids that lays afoot to the feed of amino and/or organic acid-containing particles can be derived from Protamylasse, corn steep liquor, orange juice concentrate, grass juice, beet juice, protein hydrolysates, fermentation broths, mother liquids of crystallisations, sorghum juice, pineapple juice, molasses, vinasses, and the like. When these feeds comprising amino and/or organic acids are subjected to solidification and in particular crystallisation conditions, depending on the particular amino and/or organic acid composition, they will crystallise/solidify into different amino and/or organic acid-containing particles as the various amino and/or organic acids will have a different solubility in the feed and hence crystallise at different rates and in different (mixed) compositions.

The medium used in the method of the present invention has a selected density that is effective for particles of a lower density than the selected density to float in the medium and for particles of a higher density than the selected density to sink in the medium in which the particles do not or substantially not ( i.e less than 0.1 g/l) dissolve. To this end, the density of the medium is selected such that the difference between the lower and higher density is at least 0.01 g/cm3, preferably at least 0.05 g/cm3, more preferably at least 0.1 g/cm3.

The medium, in one embodiment, is selected from the group consisting of halogenated hydrocarbons, preferably fluorinated, chlorinated or brominated or combinations hydrocarbons, trichlorofluoromethane, 1,1,2,2,tetrafluoromethane chloropentafluoroethane, octafluorocyclobutane, tetrafluoroethane tetrabromoethane, dibromomethane, chloroform, bromoform, diodomethane, 1,10-diododecane, bromotrichloromethane, and ammonium and (earth)alkalitungstate solutions, (earth)alkalihalogen salt solutions, preferably CsCI, Nal, Cal₂, CaBr₂ and NH₄Br, bentonite suspensions as described in M. Asada and S. Horiuchi in J. Mater. Civ Eng. 2005.17:178-187. Preferably, the medium is selected from the group consisting of halogenated hydrocarbons, preferably fluorinated, chlorinated or brominated or combinations hydrocarbons, trichlorofluoromethane, 1,1,2,2,tetrafluoromethane chloropentafluoroethane, octafluorocyclobutane, tetrafluoroethane tetrabromoethane, dibromomethane, chloroform, bromoform, diodomethane, 1,10-diododecane, bromotrichloromethane. CsCI is less preferred as it is relatively unsuitable for industrial scale processes such as those of the present invention.In one embodiment, the medium has a density that is higher (at least 0.01 g/cm3, preferably at least 0.05 g/cm3, more preferably at least 0.1 g/cm3. ) than the highest density of the amino and/or organic acid-containing particles. The medium has preferably a density (rho) of from 1.1 g/cm3 to 5 g/cm3, preferably from 1.3 g/cm3 to 3 g/cm3, from 1.5 g/cm3 to 2.5 g/cm3. In alternative embodiments, aimed at separation of fractions containing particles of lesser density, such as those containing relative high yields of leucine and isoleucine, prefreend ranges are from 1.01 g/cm3 to 5 g/cm3, preferably from 1.05 g/cm3 to 3 g/cm3, from 1.1 g/cm3 to 1.7 /cm3.

Amino acids, in their solid form, preferably crystalline form each have their own densities as indicated in the below table: The densities of several exemplary L-amino acids is described in: E. Berlin et al. J. Phys. Chem., 1968, 72 (6), pp 1887-1889. Other densities (in particular for DL-amino acids and organic acids are described for instance in CRC Handbook of Chemistry and Physics 54th ed., page C-724.

| Name | Aqueous Solubility (g/100g, 25 °C) | Crystal Density (g/cm3) |
|---|---|---|
| Alanine | 16.65 | 1.371 |
| Arginine | 15 | 1.325 |
| Aspartic Acid | 0.778 | 1.636 |
| Asparagine | 3.53 | - |
| Cysteine | 28 | 1.495 |
| Glutamic Acid | 0.864 | 1.566 |
| Glutamine | 2.5 | - |
| Glycine | 24.99 | 1.598 |
| Histidine | 4.19 | 1.412 |
| Isoleucine | 4.117 | 1.201 |
| Leucine | 2.426 | 1.167 |
| Lysine | 30 | 1.237 |
| Methionine | 3.381 | 1.311 |
| Phenylalanin e | 2.965 | 1.315 |
| Proline | 162.3 | 1.376 |
| Serine | 5.023 | 1.582 |
| Threonine | 9 | 1.499 |
| Tryptophan | 1.136 | 1.303 |
| Tyrosine | 0.0453 | 1.403 |
| Valine | 8.85 | 1.267 |

Thus, a feed of the amino and/or organic acid-containing particles as a starting mixture contains fractions of amino and/or organic acid-containing particles that are rich in (or essentially consist of) a particular (combination of) amino and/or organic acids. Each of these fractions will have its own density, depending on its composition. These differences in densities of the fractions is exploited in this invention.

The density of the medium can be adjusted by combining the medium with a density-adjusting compound that is typically of a significantly different density than the medium. Preferably the difference between the medium and the density adjusting compound is more than about 0.5 g/cm3, preferably more than about 1 g/cm3, more preferably more than about 2 g/cm3 and most preferably more than about 3 g/cm3. Furthermore, the amino and/or organic acid-containing particles are essentially insoluble in the medium and/or the density-adjusting compound.

Previously, lab-scale processes have been described using density gradients (media of varying density) and (ultra-) centrifuges. For instance, Wofsey et al. (PNAS 1971, 68(6), 1102-1106) describes the (lab scale) separation of tissue vesicles containing binding sites that recognise amino acids and other components and separates these loaded vesicles on a differential centrifugation in a sucrose density gradient ranging from 0.32 M sucrose to 1.5 M sucrose (densities from about 1.024-1.072 g/ml). The separation is based on kinetics and not on equilibrium . The separation needs 15 minutes at high gravitational forces (100 000 * g), the concentrations of the amino acids are in the order of 10⁻⁸ - 10⁻⁷ M. The technology needs an ultracentrifuge and is only useful as an analytical tool. Furthermore, the method disclose in Wofsey relies on relative density differences in the range of 1 M sucrose (about 1.072 g/ml) of crystalline amino-acids and/or organic acids, whereas the present method relies among others on the relative density differences of the amino - or organic acid crystals. Another example of such a lab-based method is by Silpananta (Biochem J, 1967, 104, 404) and describes the equilibrium centrifugation in CsCI gradients. Again a density gradient technology that often is used for analytical purposes. It can be used for preparative applications but still only in very small volumes since an ultracentrifuge is a required tool that needs high capital investment, high energy inputs and high labour costs and will not be used above the hundreds of millilitre scale. Silpananta describes the separation of single polymeric molecules protein (chondromucoprotein) of 250 000 D and hyaluronic acid, a substituted carbohydrate polymer. The present invention however, employs a medium of a fixed density and not a density gradient.

The density-adjusting compound is preferably an alcohol, a diol or a polyol, preferably methanol, ethanol, n-propanol, iso-propanol), n- butanol, iso-butanol, glycol, glycerol and combinations thereof. To allow for recycling it may be advantageous that the density adjusting compound and the medium are recyclable, for instance by distillation. For such purpose the density adjusting compound may have a boiling point that differs by at least 10 degrees Celsius from the medium. Alternatively, the density adjusting compound may be extractable from the medium for instance by a different solubility in a solvent compared to the medium. For instance in the case of ethanol (density adjusting compound) and bromoform (medium), aqueous extraction may allow for separation of the ethanol from the bromoform.

The selected density of the medium can be determined by the skilled person with some initial, simple and small scale experimentation. For instance by starting with a medium such as bromoform, combining the feed with the bromoform (density 2.8 g/cm3) and determining whether fractionation (floating and sinking fractions) occurs. Adding ethanol (density about 0.79 g/cm3) and allowing the mixture to settle and determine whether fractionation into fractions has occurred. This can be done in a separation funnel. By determining the composition of the fractions using conventional methods, the density can be adjusted to achieve the desired fractionation in the method of the invention.

In one embodiment, the medium and/or the density adjusting medium are inert towards the amino and/or organic acid-containing particles. Furthermore, preferably, the amino and/or organic acids are essentially insoluble (or have a very low solubility) in the medium and/or the density adjusting medium.

The amino and/or organic acid-containing particles are preferably or contain crystalline particles of amino and/or organic acids, salts of amino and/or organic acids as well as hydrates, co-crystals, co-crystallised amino and/or organic acids etc., so is not limited to pure amino and/or organic acids.

The organic acids may be selected from amongst organic mono-acids, organic diacids and hydroxyacids. The organic acids may be selected from amongst lactic acid, 3-hydroxy propanoic acid, hydroxy butyric acid, hydroxy-valeric acid, oxalic acid, succinic acid, adipic acid, pimelinic acid, formic acid, acetic acid, propionic acid, butyric acid, malic acid, fumaric acid, itaconic acid, citric acid and glycolic acid.

As used herein the notion 'amino and/or organic acids' implies only amino acids, only organic acids or a combination of amino and organic acids.

The amino acids can be any amino acid and are for instance selected from the group consisting of alanine, arginine, aspartic acid, asparagine, cysteine, glutamic acid, glutamine, glycine, histidine, isoleucine, leucine, lysine, methionine, phenylalanine, proline, serine, threonine, tryptophan, tyrosine, valine, alpha butyric acid, gamma butyric acid, ornithine, taurine, betaine.

Alternatively, the amino acids can be grouped in to essential and non-essential amino acids or grouped into, aliphatic, hydroxylic/sulfuric/selenic, cyclic, aromatic, basic, acidic and amide amino acids or into polar and nonpolar amino acids as exemplified herein below.: Essential amino acids: histidine, isoleucine, leucine, lysine, methionine, phenylalanine, threonine, tryptophan, valine. Nonessential: alanine, arginine, asparagine, aspartic acid, cysteine, glutamic acid, glutamine, glycine, ornithine, proline, selenocysteine, serine, tyrosine. Aliphatic: alanine, glycine, isoleucine, leucine, proline, valine. Aromatic: phenylalanine, tryptophan, tyrosine. Acidic: aspartic acid, glutamic acid. Basic: arginine, histidine, lysine. Hydroxylic: serine, threonine. Sulphuric: cysteine, methionine. Amidic (containing amide group): asparagine, glutamine. Most amino acids exist in two stereoisomers, denoted as D or L. The present invention focuses on amino acids obtained from natural sources which typically have an L-configuration. However, the invention may also relate to D-amino acids or mixtures of D and L.

The present invention focuses on amino acids and their salts, but the invention also may relate to organic acids and the salts thereof. Examples of these are lactic acid, citric acid, malic acid, maleic acid, succinic acid, adipic acid oxalic acid and their salts. With salts is typically meant the sodium, potassium, calcium and magnesium salts of the amino and organic acids.

The amino and/or organic acid-containing particles are combined with the medium (and optionally the density adjusting compound). Combining may be by mixing, slurrying, spraying etc. The slurry resulting from mixing may be left to stand or settle under ambient gravity in a settler or other suitable separation device. Alternatively, it may be subjected to increased gravity such as provided by a centrifugal force such as provided by a centrifuge, a hydro cyclone or a separator.

After the separation step, the two fractions (sinking and floating) are separated and isolated from the medium (with or without the density adjusting compound) by sieving, filtration, extraction. The amino and/or organic acid containing fractions may be subjected to further purification steps such as recrystallization. In recrystallization, the crystals are dissolved in water or another solvent, preferably at elevated temperatures and as concentrated as possible, so that upon further crystallization e.g. using anti-solvent crystallization high yield of pure amino and/or organic acids can be obtained. Mixed amino and/or organic acid crystals and/or entrained mixtures of particles can be further purified in this way into pure amino and/or organic acid crystals.

Alternatively, the isolated fraction (sinking or floating), with or without removal of the medium may be subject to a further separating step based on density differences using a medium of a different density or by using another ratio of the same medium/density adjusting compound to further separate the isolated fraction of amino and/or organic acid-containing particles into subfractions essentially as described herein above to hereby again obtain sinking and floating sub-fractions of amino and/or organic acid-containing particles with different compositions.

This can also be achieved in a series of separating units such as settlers in a (semi)-continuous process.

The amino and/or organic acid particles thus obtained typically have a mean particle size from about > 10 um, preferably about > 30 um, more preferably about > 100 um, most preferably about > 300 um.

The amino and/or organic acid particles produced by the method of the present invention can be further purified by conventional methods to obtain chemically pure amino and/or organic acids. The amino and/or organic acid particles obtained by the methods of the present invention may also be used as a food or feed additive.

### Examples

### Example 1:

1 g of methionine, histidine and serine crystals were mixed with 10 ml of chloroform and left for 5 minutes to settle in a bottle flask. The crystals from the bottom of the flask were collected and analysed as pure serine. The density of the chloroform was measured by weight determination of 1 ml pipetted into a container. Density being 1.48 g/cm3. The upper half of the fluid including the floating crystals were transferred to another bottle. The density of the medium was adjusted by adding ethanol, 0.2 ml ethanol for each ml of chloroform. After stirring and settling for 5 minutes, crystals were collected from the bottom of the flask and identified as histidine while the crystals that were floating were identified as methionine.

### Example 2:

Foam earth is a waste product from the beet sugar industry. It contains phosphate, amino acids, organic acids that have been precipitated by addition of calciumhydroxide to the thin sugar juice. Foam earth was dried and the particles were crushed to fine particles. These particles were suspended in dibromomethane with a density of 2.5 g/cm3. Only minute amounts of particles were found at the bottom of the flask. Adjusting the density to 2.27 using ethanol as described in example 1, a top layer was formed that floats and a bottom layer was formed. The top layer was separated and diluted with ethanol to a density of 1.9 g/cm3 and again a bottom layer and a top layer were formed. These layers have both been analysed for the ratio in which the amino acids and organic acids were distributed over the top layer and the bottom layer.

Calcium salts of amino acids glutamine, Gaba (gamma butyric acid), cystein, ornithin and citric acid distributed about equal over top and bottom layer. Calcium salts of lysine, lactic and formic acid concentration was factor 2 higher in bottom layer; for aspartic, serine, arginin, glycine, threonin, alanin, valine, isoleucin, phenylalanin, this factor was around 5, while for tyrosine, leucine and glutamic acid it was higher than 8. Calcium salts of acetic acid and succinic acid were 13 fold higher in the bottom layer.

### Example 3:

### Uric acid from poultry manure

Fresh chicken manure was dried against the air for two days. About 2.2 gram of the dried material was suspended in 7 ml Dibromomethane. All the dried material floated on top of the suspension. There was no precipitate observed, indicating the absence of calciumcarbonate with high density that sometimes is administered to the chicken feed.

The density of the liquid phase was lowered by addition of ethanol to about 1.8 g/ ml. After centrifugation at this density an almost white precipitate was visible that was identified as uric acid while most of the poultry manure was floating on the top of the tube. The uric acid was washed with ethanol and dried. The weight of the sample was 0. 12 gram.

### Example 4:

### Separation of complex mixture of 20 amino acids at 2 liter scale

A glass settler was constructed from a cylindrical top part with a diameter of about 10 cm and a height of about 30 cm and a conical bottom part that has a valve in the bottom to take samples from the bottom. The conical top part contains 6 valves more or less equally separated vertically to take samples from the top of the cylinder or from somewhere in between top and bottom. The top and the bottom part are connected by a plastic connector to keep the two parts together. The cylinder was filled with 1 liter of dibromomethane and 1.25 l of ethanol. The temperature was 21C. The mixture was stirred with a top stirrer for 1 minute. A mixture of dry 20 proteogenic crystalline amino acids was made containing about 5 gram of each amino acid and added to the cylinder from the top. Again the suspension was stirred for 2 minutes and then the suspension was given time to settle. From valve 3 from the top a sample liquid was taken and the density was determined to be 1.55 g/ml. A sample of about 120 ml was taken from the bottom. This contained 4 amino acids: asp, gly, glu and ser. Some small background of the apolar amino acids could be observed. It was concluded that some aminoacids had dissolved. 100 ml ethanol was added from the top of the cylinder and the suspension was stirred for 2 minutes and given time to settle. From valve 3 from the top a sample liquid was taken and the density was determined to be 1.55 g/ml. A sample of about 110 ml was taken from the bottom. ASN and thr were in this fraction. 140 ml ethanol was added from the top of the cylinder and the suspension was stirred for 2 minutes and given time to settle. From valve 3 from the top a sample liquid was taken and the density was determined to be 1.51 g/ml. A sample of about 110 ml was taken from the bottom. Asn and thr were in this fraction. 140 ethanol was added from the top of the cylinder and the suspension was stirred for 2 minutes and given time to settle. From valve 3 from the top a sample liquid was taken and the density was determined to be 1,41 g/ml. A sample of about 150 ml was taken from the bottom. Gln, cys and his were in this fraction. 140 ethanol was added from the top of the cylinder and the suspension was stirred for 2 minutes and given time to settle. From valve 3 from the top a sample liquid was taken and the density was determined to be 1.37 g/ml. A sample of about 135 ml was taken from the bottom. Tyr, ala and pro were in this fraction. 250 ml ethanol was added from the top of the cylinder and the suspension was stirred for 2 minutes and given time to settle. From valve 3 from the top a sample liquid was taken and the density was determined to be 1.31 g/ml. A sample of about 110 ml was taken from the bottom. Arg, met and phe were in this fraction. 300ml of the suspension was taken from the second valve. Ile, leu, trp, val and lys were in this fraction.

### Example 5:

### Separation of Anthranylic acid and Para amino benzoic acid

1 gram of each of anthranylic acid and para amino benzoic acid were suspended in a solution of 5ml ZnBr2 in water at 77% concentration in a small beaker of 25 ml containing a magnetic stirrer. The density was 2.42 g/ml. All the chemicals float on top of the liquid. Every 2.5 minute water was added drop wise until some precipitation started to occur. 12.1 ml of water had been added as determined by the weight increase. The density was measured to be 1.41 g/ml . After 1 ml addition of more water, a precipitate was formed. This precipitate was soaked out by a 1000µl micropipet from the bottom of the beaker. The density of the suspension was measured to be 1.42 g/ml.

To the remaining liquid small amounts (200µl) of water were added by a micropipet, stirred for 1 minute and then 2.5 minutes time to settle and float. No additional precipitate was formed until 800µl had been added. At this density (about 1,38 g/ml) a top layer as well as additional precipitate were visible. After two more portions of 200µl of water, stirring and time to settle, no floating material was observed anymore.

### Example 6

### Separation of hydroxy acids

Fine powdered crystals of 0.25 gram D-glucuronic acid and 0.25 gram mucic acid were mixed in a centrifuge tube in which 10 gram of dibromomethane was present. Heptanes (about 2 gram) was added in small portions and with occasional mixing until the solids were no longer floating on the solvent mixture but showed a rather uniform suspension throughout the length of the tube. The suspension was centrifuged at 4700 rpm during 2 minutes. A white layer at the top was present and also an off-white precipitate. The top layer was filtered of and identified as D-glucuronic acid by NMR as a mixture of the alpha and beta form. The precipitate was identified by NMR as mucic acid.

## Claims

1. Method for separating amino and/or organic acid-containing particles from a mixture of amino and/or organic acid-containing particles based on density, comprising
- providing a feed of amino and/or organic acid-containing particles
- providing a medium in which the particles do not, or less than 0.1 g/l, dissolve, wherein the medium has a fixed density and not a density gradient, and wherein the medium has a selected density effective for particles of a lower density than the selected density to float in the medium and for particles of a higher density than the selected density to sink in the medium;
- combining the feed of the amino and/or organic acid-containing particles with the medium; and
- separating the amino and/or organic acid-containing particles of the higher density from the amino and/or organic acid-containing particles of the lower density.

2. Method according to claim 1, wherein the difference between lower and higher density is at least 0.01 g/cm3, preferably at least 0.05 g/cm3, more preferably at least 0.1 g/cm3 .

3. Method according to claim 1 or 2, wherein the medium is selected from the group consisting of halocarbons, preferably fluorinated, brominated, chlorinated, iodinated hydrocarbons, trichlorofluoromethane, 1,1,2,2,tetrafluoromethane chloropentafluoroethane, octafluorocyclobutane, tetrafluoroethane tetrabromoethane, dibromomethane, chloroform, bromoform, diodomethane, 1,10-diododecane, and ammonium and (earth)alkalitungstate and (earth)alkalimetal halide solutions,

4. Method according to any one of claims 1-3, wherein the amino and/or organic acid-containing particles are crystalline amino and/or organic acid-containing particles and/or comprise salts of amino and/or organic acids.

5. Method according to any one of claims 1-4, wherein the medium further comprises a density-adjusting compound.

6. Method according to any one of claims 1-5, wherein the medium has a density (rho) of from 1.1 g/cm3 to 5 g/cm³, preferably from 1.3 g/cm³ to 3 g/cm³, from 1.5 g/cm³ to 2.5 g/cm³,

7. Method according to any one of claims 1-6, wherein the step of separating is performed under ambient gravity.

8. Method according to any one of claims 1-6 wherein increased gravity is provided by a centrifugal force.

9. Method according to any one of claims 1-8, wherein the separation is a continuous process.

10. Method according to any one of claims 1-9, wherein the continuous process is a series of two or more of settlers, centrifuges, hydrocyclones, and separators and combinations thereof.

11. Method according to any one of claims 1-10, wherein the separated particles are fed into a further separator containing a medium of a different density.

12. Method according to any one of claims 1-11, wherein the particles have a mean particle size from > 10 µm, preferably > 30 µm, more preferably > 100 µm, most preferably > 300 µm.

13. Method according to any one of claims 1-12, wherein the amino and/or organic acid-containing particles are obtained by subjecting a feed comprising amino and/or organic acids to solidification and preferably crystallisation conditions.

14. Method according to claim 13, wherein the step of subjecting a feed comprising amino and/or organic acids to solidification and preferably crystallisation conditions provides for different fractions of amino and/or organic acid-containing particles that are rich in, or essentially consist of, a particular amino and/or organic acid or a particular combination of amino and/or organic acids.

15. Method according to any one of claims 13-14, wherein the method separates the mixture of amino and/or organic acid-containing particles into fractions that are enriched in certain amino and/or organic acids and/or depleted in other amino and/or organic acids.

## Patentansprüche

1. Verfahren zum Abscheiden von Amino- und/oder organische Säure enthaltenden Teilchen aus einem Gemisch von Amino- und/oder organische Säure enthaltenden Teilchen auf Grundlage der Dichte, umfassend
- Bereitstellen einer Zufuhr von Amino- und/oder organische Säure enthaltenden Teilchen,
- Bereitstellen eines Mediums, in dem sich die Teilchen nicht oder mit weniger als 0,1 g/l lösen, wobei das Medium eine feste Dichte und keinen Dichtegradienten aufweist, und wobei das Medium eine ausgewählte Dichte aufweist, die bewirkt, dass Teilchen mit einer niedrigeren Dichte als der ausgewählten Dichte im Medium schwimmen und Teilchen mit einer höheren Dichte als der ausgewählten Dichte im Medium absinken;
- Kombinieren der Zufuhr von Amino- und/oder organische Säure enthaltenden Teilchen mit dem Medium; und
- Abscheiden der Amino- und/oder organische Säure enthaltenden Teilchen mit der höheren Dichte von den Amino- und/oder organische Säure enthaltenden Teilchen mit der niedrigeren Dichte.

2. Verfahren nach Anspruch 1, wobei der Unterschied zwischen der niedrigeren und der höheren Dichte mindestens 0,01 g/cm³, vorzugsweise mindestens 0,05 g/cm³, insbesondere mindestens 0,1 g/cm³ beträgt.

3. Verfahren nach Anspruch 1 oder 2, wobei das Medium aus der Gruppe ausgewählt ist, die aus Halogenkohlenwasserstoffen, vorzugsweise fluorierten, bromierten, chlorierten, iodierten Halogenkohlenwasserstoffen, Trichlorfluormethan, 1,1,2,2,-Tetrafluormethanchlorpentafluorethan, Octafluorcyclobutan, Tetrafluorethantetrabromethan, Dibrommethan, Chloroform, Bromoform, Diiodmethan, 1,10-Diiododecan- und Ammonium und (Erd-)Alkalimwolframat und (Erd)Alkalimetallhalogenidlösungen besteht.

4. Verfahren nach einem der Ansprüche 1 bis 3, wobei die Amino- und/oder organische Säure enthaltenden Teilchen kristalline Amino- und/oder organische Säure enthaltende Teilchen sind und/oder Salze von Amino- und/oder organischen Säuren umfassen.

5. Verfahren nach einem der Ansprüche 1 bis 4, wobei das Medium ferner eine die Dichte anpassende Verbindung umfasst.

6. Verfahren nach einem der Ansprüche 1 bis 5, wobei das Medium eine Dichte (rho) von 1,1 g/cm³ bis 5 g/cm³, vorzugsweise von 1,3 g/cm³ bis 3 g/cm³, von 1,5 g/cm³ bis 2,5 g/cm³ aufweist.

7. Verfahren nach einem der Ansprüche 1 bis 6, wobei der Schritt des Abscheidens unter Umgebungsschwerkraft durchgeführt wird.

8. Verfahren nach einem der Ansprüche 1 bis 6, wobei eine erhöhte Schwerkraft durch eine Zentrifugalkraft bereitgestellt wird.

9. Verfahren nach einem der Ansprüche 1 bis 8, wobei die Abscheidung ein kontinuierlicher Prozess ist.

10. Verfahren nach einem der Ansprüche 1 bis 9, wobei der kontinuierliche Prozess eine Reihe von zwei oder mehreren Absetzern, Zentrifugen, Hydrozyklonen und Abscheidern und Kombinationen davon ist.

11. Verfahren nach einem der Ansprüche 1 bis 10, wobei die abgeschiedenen Teilchen in einen weiteren Abscheider eingespeist werden, der ein Medium mit einer anderen Dichte enthält.

12. Verfahren nach einem der Ansprüche 1 bis 11, wobei die Teilchen eine mittlere Teilchengröße von > 10 µm; vorzugsweise > 30 µm, insbesondere > 100 µm, am bevorzugtesten > 300 µm aufweisen.

13. Verfahren nach einem der Ansprüche 1 bis 12, wobei die Amino- und/oder organischen Säure enthaltenden Teilchen erhalten werden, indem ein Einsatzmaterial, das Amino- und/oder organische Säuren umfasst, Verfestigungs- und vorzugsweise Kristallisationsbedingungen unterworfen wird.

14. Verfahren nach Anspruch 13, wobei der Schritt, bei dem ein Einsatzmaterial, das Amino- und/oder organische Säuren umfasst, Verfestigungs- und vorzugsweise Kristallisationsbedingungen unterworfen wird, verschiedene Fraktionen von Amino- und/oder organische Säure enthaltende Teilchen bereitstellt, die reich an einer bestimmten Amino- und/oder organischen Säure oder einer bestimmten Kombination von Amino- und/oder organischen Säuren sind oder im Wesentlichen daraus bestehen.

15. Verfahren nach einem der Ansprüche 13 bis 14, wobei das Verfahren das Gemisch von Amino- und/oder organische Säure enthaltenden Teilchen in Fraktionen abscheidet, die mit bestimmten Amino- und/oder organischen Säuren und/oder mit anderen Amino- und/oder organischen Säuren angereichert sind.

## Revendications

1. Procédé de séparation de particules contenant des acides organiques et/ou aminés à partir d'un mélange de particules contenant des acides organiques et/ou aminés sur la base de la densité, comprenant
- la fourniture d'une alimentation de particules contenant des acides organiques et/ou aminés ;
- la fourniture d'un milieu dans lequel les particules ne font pas ou moins de 0,1g/L, dissous, dans lequel le milieu a une densité fixe et pas une densité en gradient, et dans lequel le milieu a une densité sélectionnée efficace pour des particules d'une densité inférieure à la densité sélectionnée pour flotter dans le milieu et pour des particules d'une densité supérieure à la densité sélectionnée pour s'enfoncer dans le milieu ;
- la combinaison de l'alimentation des particules contenant des acides organiques et/ou aminés avec le milieu ; et
- la séparation des particules contenant des acides organiques et/ou aminés de la densité supérieure des particules contenant des acides organiques et/ou aminés de la densité inférieure.

2. Procédé selon la revendication 1, dans lequel la différence entre densité inférieure et densité supérieure est d'au moins 0,01 g/cm³, de préférence d'au moins 0,05 g/cm³, plus préférablement d'au moins 0,1 g/cm3.

3. Procédé selon la revendication 1 ou 2, dans lequel le milieu est choisi dans le groupe constitué par les hydrocarbures halogénés, de préférence les hydrocarbures fluorés, bromés, chlorés, iodés, le trichlorofluorométhane, le 1,1,2,2,tétrafluorométhane, le chloropentafluoroéthane, l'octafluorocyclobutane, le tétrafluoroéthane, le tétrabromoéthane, dibromométhane, chloroforme, bromoforme, diodométhane, 1,10-diododécane, et les solutions d'halogénures d'ammonium, d'alcalitungstate (de terre) et de métaux alcalins (de terre).

4. Procédé selon l'une des revendications 1 à 3, dans lequel les particules contenant des acides organiques et/ou aminés sont des particules contenant des acides organiques et/ou aminés cristallins et/ou comprennent des sels d'acides organiques et/ou aminés.

5. Procédé selon l'une des revendications 1 à 4, dans lequel le milieu comprend en outre un composé d'ajustement de la densité.

6. Procédé selon l'une des revendications 1 à 5, dans lequel le milieu a une densité (rho) de 1,1 g/cm³ à 5 g/cm³, de préférence de 1,3 g/cm³ à 3 g/cm³, de 1,5 g/cm³ à 2,5 g/cm3.

7. Procédé selon l'une des revendications 1 à 6, dans lequel l'étape de séparation est effectuée sous l'effet de la gravité ambiante.

8. Procédé selon l'une des revendications 1 à 6, dans lequel l'augmentation de la gravité est assurée par une force centrifuge.

9. Procédé selon l'une des revendications 1 à 8, dans lequel la séparation est un processus continu.

10. Procédé selon l'une des revendications 1 à 9, dans lequel le processus continu est une série de deux ou plusieurs décanteurs, centrifugeuses, hydrocyclones, et séparateurs et de combinaisons de ceux-ci.

11. Procédé selon l'une des revendications 1 à 10, dans lequel les particules séparées sont introduites dans un autre séparateur contenant un milieu de densité différente.

12. Procédé selon l'une des revendications 1 à 11, dans lequel les particules ont une taille moyenne de particules > 10 µm, de préférence > 30 µm, plus préférablement > 100 µm, plus préférablement > 300 µm.

13. Procédé selon l'une des revendications 1 à 12, dans lequel les particules contenant des acides organiques et/ou aminés sont obtenus en soumettant une alimentation comprenant des acides organiques et/ou aminés à des conditions de solidification et de préférence de cristallisation.

14. Procédé selon la revendication 13, dans lequel l'étape consistant à soumettre une alimentation comprenant des acides organiques et/ou aminés à des conditions de solidification et de préférence de cristallisation prévoit différentes fractions de particules contenant des acides organiques et/ou aminés qui sont riches en, ou consistent essentiellement en, un acide organique et/ou aminé particulier ou une combinaison particulière d'acides organiques et/ou aminés.

15. Procédé selon l'une des revendications 13 ou 14, dans lequel le procédé sépare le mélange de particules contenant des acides organiques et/ou aminés en fractions qui sont enrichies en certains acides organiques et/ou aminés et/ou appauvries en d'autres acides organiques et/ou aminés.
